# EUROPEAN PATENT SPECIFICATION

(11) **EP 1 567 382 B1**
(45) Date of publication and mention of the grant of the patent: **25.06.2008**
(21) Application number: 03812241.2
(22) Date of filing: 01.12.2003
(51) Int. Cl.: B60J 10/00, B60J 10/08

(54) **WINDOW SEALING AND GUIDING ARRANGEMENTS**
FENSTERDICHTUNGS- UND FÜHRUNGSANORDNUNGEN
DISPOSITIFS DE GUIDAGE ET D'ETANCHEITE POUR FENETRE

(30) Priority: 04.12.2002 GB 0228290; 31.12.2002 GB 0230327
(43) Date of publication of application: 31.08.2005
(73) Proprietor: GDX North America Inc., Dover Delaware 19901 (US)
(72) Inventor: BOCCUTO, Domenico, Nettetal 41334 (DE)
(74) Representative: Foster, Mark Charles
(86) International application number: PCT/IB2003/005622
(87) International publication number: WO 2004/050408

(56) References cited:
- EP-A- 0 245 594
- EP-A- 1 293 372
- WO-A-01/15926
- GB-A- 1 431 460
- US-A- 5 269 101
- US-A- 5 699 603

## Description

### Technical Field

The invention relates to window sealing and guiding arrangements. Embodiments of the invention, to be described in more detail below by way of example only, are in the form of sealing and guiding strips and window frame arrangements for window frames carried by vehicle doors, where the window frame has a change in direction. However, embodiments of the invention can be used for other purposes.

### Background Art

US-A-5269101, EP-A-0245594 and GB-A-1431460 disclose sealing strips for mounting on a rigid panel, such as a door frame, in a region where there is a change in direction of that panel (for example at the corner of a door frame). Further, document WO 01/15926 is considered to be the most relevant prior art document. In each of these prior art documents additional components were introduced into the sealing strip in the region of the change in direction in order to allow the strip to satisfactorily follow the change in direction. The joins between these additional components and the strip are visible in use, which has a deleterious effect on the appearance of the sealing strip as a whole.

It is an object of the present invention to provide a sealing or guiding strip with an improved appearance.

### Disclosure of Invention

According to the invention, there is provided a sealing or guiding strip as defined in claim 1.

Advantageous features of the strip are defined in the dependent claims.

The invention also provides a window frame arrangement in combination with the strip, as defined in claim 16.

The invention further provides a method of making a strip as defined in claim 20.

### Brief Description of Drawings

Window sealing and guiding strips and window frame arrangements embodying the invention, and for use in windows in motor vehicle bodies, will now be described, by way of example only, with reference to the accompanying diagrammatic drawings in which:
Figure 1 is a side view of a vehicle door carrying one of the strips;
Figure 2 is an enlarged view of the area II of Figure 1;
Figure 3 is a section on the line IV-IV of Figure 2;
Figure 4 is a section on the line III-III of Figure 2;
Figure 5 is a section on the line VI-VI of Figure 2;
Figure 6 is a section on the line V-V of Figure 2;
Figures 7 and 8 correspond to Figures 4 and 6 but show a modification; and
Figure 9 explains a process of manufacturing the strip portion shown in Figures 7 and 8.

### Modes of Carrying Out The Invention

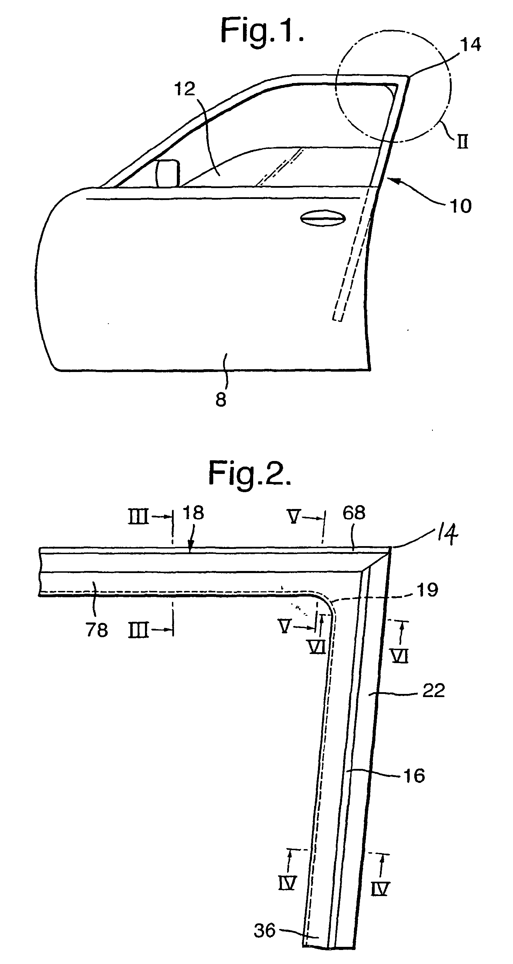

Figure 1 shows a vehicle door 8 carrying a sealing and guiding channel arrangement 10 in which a pane of window glass 12 is slidable in a vertical direction as it is raised from or lowered into the lower part of -the door 8. The sealing and guiding arrangement 10 comprises a window frame and sealing and guiding channels mounted on the frame, as will be described. The sealing and guiding channels define a sharp corner 14 and the construction in the region of the sharp corner is shown in enlarged detail in Figure 2.

As shown in Figure 2, along the 'B' pillar of the vehicle, the sealing and guiding arrangement 10 comprises a strip portion 16. The strip portion 16 is of channel form to receive the window pane 12 and comprises an outer channel wall 16A (on the outside of the window pane) and an inner channel 16B (on the inside of the window pane).

Along the top of the window frame (and along the 'A' pillar of the vehicle), the sealing and guiding channel arrangement 10 comprises a strip portion 18. The strip portion 18 is of also channel form to receive the window pane 12 and comprises an outer channel wall 18A (that is, a channel wall on the outside of the window pane) and an inner channel wall 18B (that is, a channel wall on the inside of the window pane 12).

The two strip portions 16 and 18 are mitre-cut and joined together at the sharp corner 14.

The stiff window frame on which the strip portions 16,18 are mounted is only partly visible in Figures 1 and 2. The construction of the window frame, and the manner in which the strip portions 16,18 are mounted on it will be described below.

At the sharp corner 14, the window frame is smoothly radiussed as shown dotted at 19 and this part of the frame is covered over by a flap 20 forming part of the sealing and guiding channel 10 in a manner to be explained.

In a manner to be explained in more detail below, the sealing and guiding strip channel 10 is produced, such as by extrusion, from flexible material such as plastics or rubber. It is designed to provide a weather-proof seal for the edge of the window glass and also to impose low friction on the movement of the glass.

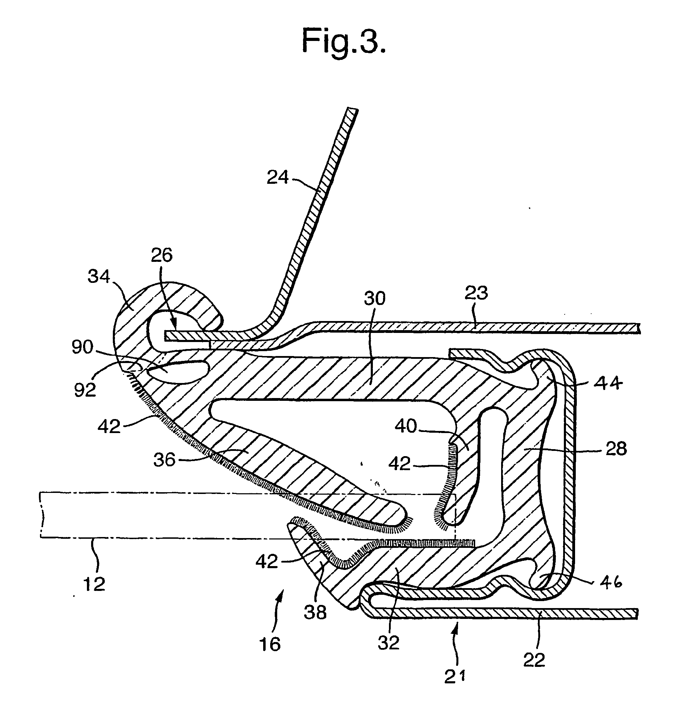

Figure 3 shows a section on the line IV-IV of Figure 2, that is, along the 'B' pillar. The stiff window frame is shown generally at 21 and comprises a rigid channel formed by bending over the outer panel 22 of the vehicle door and then forming the bent-over portion into channel form. The window frame 21 is completed by the inner panels 23 and 24 of the door which meet to form a flange 26.

The strip portion 16 is made of extruded plastics or rubber material and is of integral channel-form comprising a base 28 and side walls 30 and 32. Along its distal edge, the side wall 30 extends in one direction to form a lip (a "cosmetic lip") 34 which covers over the edge of the flange 26 and extends in the other direction to form a longer and more flexible lip 36 which extends partway across the mouth of the channel. The distal edge of the wall 32 is extended to form a short flexible lip 38. Adjacent the base 28 of the channel is a further lip 40. The window pane 12 is guided within the channel as it slides in a vertical direction by the lips 36,38 and 40. The surfaces of these lips making contact with the window glass 12 are advantageously covered with layers of flock 42, or another suitable low-friction coating.

The outside of the base 28 of the portion 16 has short outwardly extending lips 44,46 which help to secure the strip portion 16 within the channel of the window frame 21.

Different parts of the strip portion 16 may have different hardnesses.

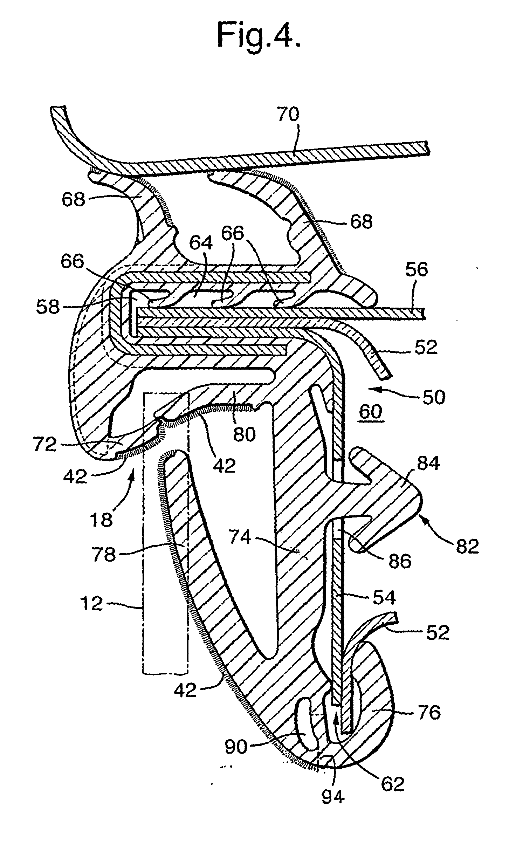

Figure 4 is a cross-section on the line III-III of Figure 2. Here, the window frame shown generally at 50 is formed by panels 52,54 and 56 of the door which are joined together to form a flange 58 projecting outwardly of the door. The panels 52 and 54 diverge from each other in the direction away from the flange 58 to form a hollow space 60 and then come together again to form a further flange 62 where they are again joined together.

The strip portion 18 is again extruded integrally from plastics or rubber material and defines a channel 64 which embraces the flange 58 to hold the strip portion 18 in position. The extruded material may carry integral inwardly extending lips 66 to assist in securing the sealing and guiding strip in position on the flange and a reinforcing carrier 67 may be embedded in the extruded material. The reinforcing carrier 67 may be formed from any suitable relatively rigid material, such as metal or plastics.

The extruded material of the strip portion on one outside wall of the channel 64 carries large flexible sealing lips 68 which, when the vehicle door 8 is closed, seal against the roof line 70 of the vehicle.

The material on the outside of the base of the channel 64 carries a re-entrant lip 72. The material adjacent the mouth of the channel 58 is extended to form a limb 74 which lies against the door panel 54 and terminates in a lip (a "cosmetic lip") 76 which embraces the edge of the flange 62. In addition, the distal end of the limb 74 integrally carries a large flexible lip 78 which extends towards the lip 72 so that, together, these lips define the channel for receiving the window pane 12 (shown dotted). A further lip 80 extends partway across the base of this channel.

The surfaces of the lips 72,78 and 80 which make contact with the window pane 12 may carry layers of flock 42, or another suitable low-friction coating.

The limb 74 is further clamped to the window frame by means of a resiliently deformable protrusion 82 having an enlarged head portion 84 which is pushed through an aperture 86 in the panel 54 and into the hollow space 60. After passing through the aperture 86, the enlarged head 84 resiles and presses against the panel 54 around the edges of the aperture 86.

It will be noted that the extruded plastics or rubber material of the strip portion 16 of Figure 3 is provided with a longitudinally extending hollow cavity or chamber 90 located near the distal edge of the channel side wall 30. A similar longitudinally extending hollow chamber 90 is provided in the material of the strip portion 18 shown in Figure 4, this hollow chamber being located at the distal end of the limb 74.

As explained in connection with Figure 2, the window frame 12 includes a portion 19 (shown dotted) which smoothly bridges across the sharp corner. In other words, the door panels 23,24 (Figure 3) are progressively extended in length (in the direction towards the centre of the window opening), in the immediate vicinity of the sharp angle 14, this increase in length being progressively greater in the direction up the "B" pillar towards the sharp corner 16. Similarly, the lengths of the door panels 52 and 54 (Figure 4) progressively increase in the direction along the roof line towards the sharp corner 16.

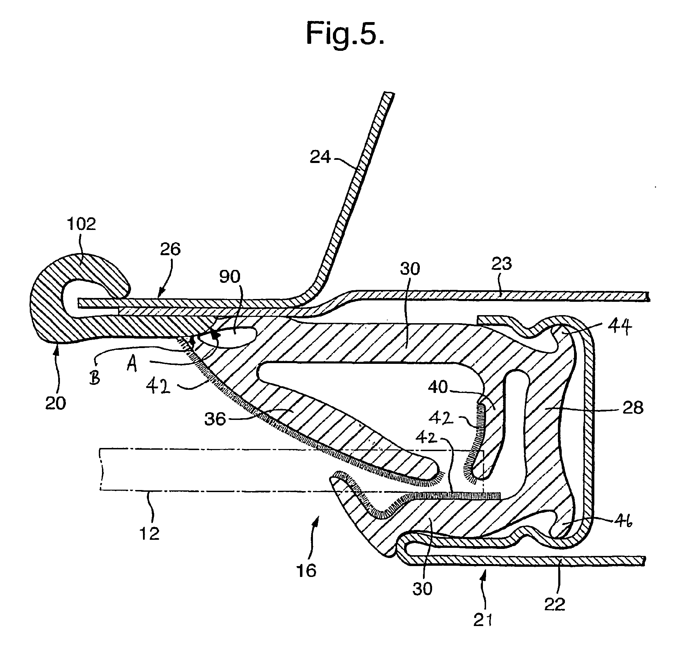

Figure 5 shows a section on the line VI-VI of Figure 2, the section plane being closer to the sharp corner 16 than the section plane IV-IV of Figure 3. Figure 5 shows that the general-shape of the window frame and the strip portion 16 is similar to that shown in Figure 3, except that the panels 22 and 24 have increased length.

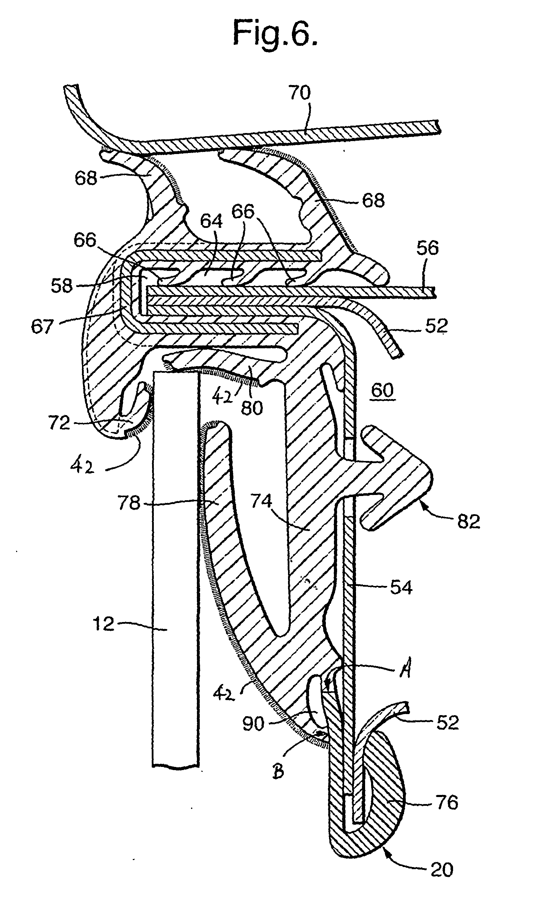

Similarly, Figure 6 is a section on the line V-V of Figure 2, the section plane being closer to the sharp angle 16 than the section plane III-III shown in Figure 4. Here, again, the configuration of the window frame and of the strip portion 18 is generally the same as is shown in Figure 4, except for the extended lengths of the panels 52 and 54.

As explained above, in constructing the sealing and guiding channel 10 for the window opening, separate sealing and guiding strip portions 16,18, respectively having the configurations shown in Figures 3 and 4, are extruded and one end of each such strip is mitre-cut and the two cut ends are brought together and joined at the sharp angle 14. However, because of the extended lengths of the panels 23 and 24 (as shown in Figure 5) and 52 and 54 (as shown in Figure 6), it is necessary to modify the configuration of the sealing and guiding strip portions 16,18 in the region of the sharp angle 14.

As shown in Figure 5, this is achieved (for the strip portion 16) by cutting through the extruded material along the dotted line shown at 92 (in Figure 3) adjacent to the wall of the hollow chamber 90, so as to remove the cosmetic lip 34. Similarly, and as shown in Figure 6, a cut is made through the extruded material along the dotted line shown at 94 (in Figure 4) immediately adjacent the hollow chamber 90, so as to remove the cosmetic lip 76. These cutting actions take place, of course, only over those parts of the lengths of the strip portions 16,18 adjacent the sharp corner 14, where the lengths of the panels forming the respective window frame portions have been extended.

It should be understood that the cut may be made in a different position to that shown at 92 or 94.

After the cosmetic lips 34 and 76 have been removed in this way, the two ends of the sealing and guiding strip portions 16,18 are brought together (after having been mitre-cut) in a mould. The moulding operation not only joins the mitre-cut ends together but also moulds the extended flap 20 (see Figures 5 and 6), carrying a cosmetic lip 102, into position on both strip portions 16,18. This flap 20 becomes joined to the sealing and guiding strip portions 16,18 along (only) regions A of the cutting lines 92 (Figure 5) and 94 (Figure 6). It is preferred in this embodiment to mould the flap 20 to the sealing and guiding strip portions 16,18 only along region A because this avoids having to subject the flock 42 in regions B to the heat and pressure required for the moulding operation. This reduces or prevents damage to the flock 42, so that the flock 42 will have a neat and attractive appearance, the flock extending completely up to the point where the flap 20 abuts the lip 78.

It is possible to mould the flap 20 to the sealing and guiding strip portions 16,18 additionally (or alternatively) along regions B of the cutting lines 92 (Figure 5) and 94 (Figure 6). If, however, the flap 20 is moulded to the sealing and guiding strip portions 16,18 at regions B, then it may be advantageous to not apply flock 42 to the surface of the lip 78 near the region B, but instead to leave a non-flocked surface area between the flock 42 and the region B. Flock applied to this area may be damaged by the moulding process and might have an unattractive appearance, and there may not be a visually distinct line at the point where the flap 20 meets the lip 78.

The cosmetic lip 102 carried by the moulded-on flap 20 embraces the flange produced where the ends of the extended panels 23,26 (Fig. 5) meet and where the extended panels 52,54 (Figure 6) meet.

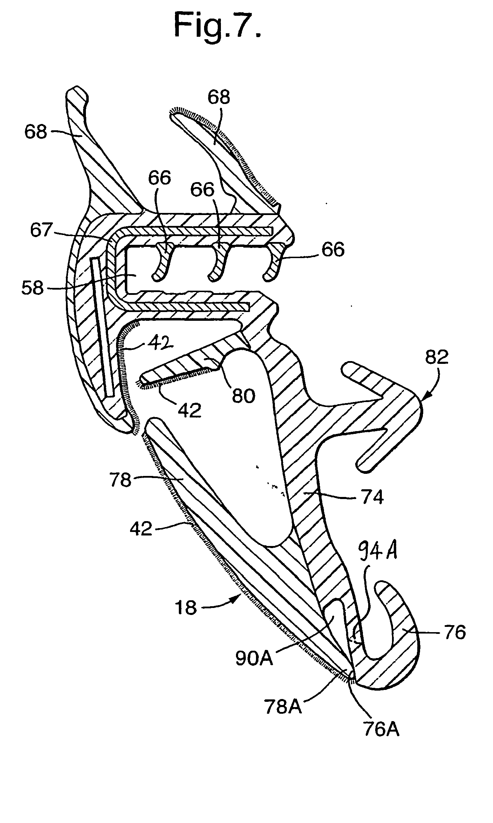

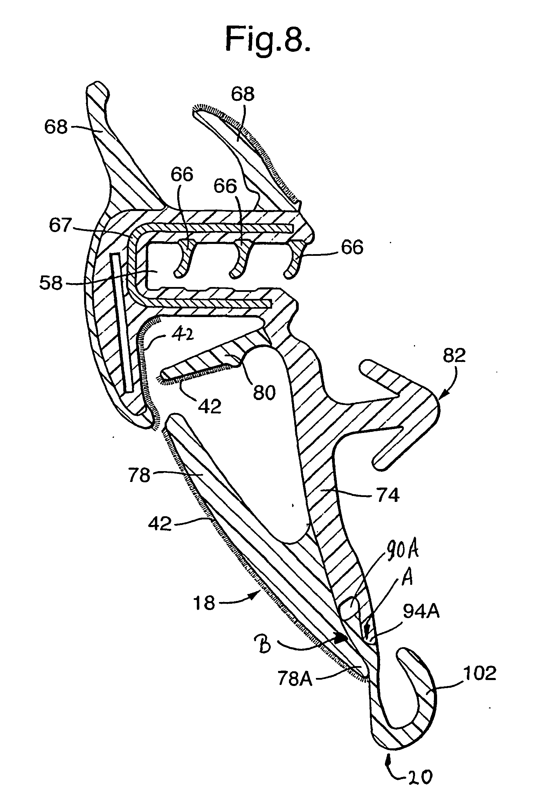

Figures 7 and 8 correspond generally to Figures 4 and 6 except that the window frame on which the strip portion 18 is mounted is not shown in Figures 7 and 8. Parts in Figures 7 and 8 corresponding to parts in Figures 4 and 6 are similarly referenced.

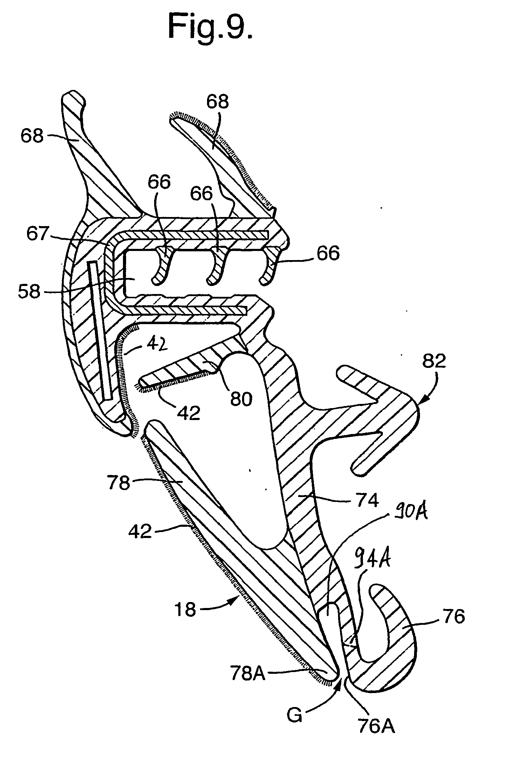

In Figures 7 and 8, the hollow chamber 90 is not formed within the extruded material but is replaced by a hollow cavity 90A. The large flexible lip 78 has a "foot" 78A which is produced by the extrusion process so as to be separate from the extruded material of the cosmetic lip 76. Figure 9 (showing part, only, of Figure 7) shows the relative positioning of the distal edge of the foot 78A and the adjacent surface 76A of the cosmetic lip 76 at the exit of the extruder and shows a gap 'G' between them. However, at the exit of the extruder, a suitable roller arrangement is provided which forces the distal edge 78A of the foot 78 into firm contact with the surface 76A of the cosmetic lip 76. Because the material has only just emerged from the extruder, the two parts which are pressed firmly together by the roller arrangement become adhered to each other (for example, by the cross-linking process which continues after extrusion), thereby forming the cavity 90A. In this way, therefore, no unsightly gap is visible to an observer viewing into the channel which receives the window pane. As an alternative to pressing the two parts together and causing them to adhere or stick to one another, the parts may be pressed together so that they abut one another but are not adhered together.

In the region of the sharp angle 14, the smoothly radiussed part 19 of the window frame (see Figure 2) is covered over by a flap 20 as explained. As shown in Figure 8, therefore, a cut is made along a line 94A to separate the material of the foot 78A of the lip 78 from the material of the cosmetic lip 76 and the cosmetic lip 76 is removed. Then, a moulding operation is carried out to produce the extended flap 20 carrying the cosmetic lip 102 which thus embraces the ends of the extended panels 52, 54 (Figure 6, but not shown in Figure 8).

In Figure 8 the flap 20 is shown partially filling.the hollow cavity 90A. It should be understood that the material of the flap 20 could completely fill the hollow cavity 90A, so that there is no void.

The region A where the flap 20 is moulded onto the material of the window channel is not externally visible, being hidden behind the distal edge of the foot 78A. The flap 20 may be only moulded onto the window channel at region A, or it may additionally (or alternatively) be moulded onto the window channel at region B, where the distal edge 78A of the foot 78 meets the flap 20.

Advantageously, in this embodiment, the flap 20 is made from TPE, instead of conventional EPDM. TPE can be formed and moulded onto other components at a lower mould temperature than is required for EPDM. The moulding process for the TPE flap is therefore less likely to damage the flock 42 at the distal edge 78A of the foot 78.

However, it should be understood that the flap 20 could be formed of EPDM (or any other suitable material). If the flap 20 is formed of EPDM and is moulded onto the window channel at region B, then it may be preferred to not apply flock 42 to the distal edge 78A of the foot 78, because flock at this region may be damaged by the heat of the moulding operation and may have an unattractive appearance.

The use of TPE is also advantageous because it can be recycled relatively easily.

Along the B pillar of the window frame, the strip portion 16 (Figures 3 and 5) may be modified in the same way as described with reference to Figures 7, 8 and 9, to produce a cavity 90A instead of the cavity or chamber 90. The moulding operation can thus be arranged to join the strip portions 16 and 18 together and to mould the extended flap 20, carrying the cosmetic lip 102, onto both strip portions where they meet at the corner of the window frame.

Although the foregoing description has illustrated the construction in the region of a sharp corner 14, the same general form of construction can be used in cases where there is no sharp corner but some other form of change of direction such as a corner with a less sharp angle or a curve or bend, for example where the A or C pillar meets the roof.

## Claims

1. A sealing or guiding strip (16) comprising a body made of flexible material for mounting on a panel (54) having an edge (62), the panel (54) being more rigid than the flexible material and varying in size so that the panel has a first region of relatively small extent and a second region of relatively large extent, wherein the body overlies the first region of the panel (54) in use and partially overlies the second region of the panel (54) in use, and has an edge with a hollow cavity (90) formed in the body adjacent only to the edge of the body and an integral formation (76) at the edge of the body arranged to juxtapose with the edge (62) of the panel (54) along the first region of the panel (54), the integral edge formation (76) being removable, at a region corresponding to the second region of the panel (54), along a cut line (92) extending into the hollow cavity (90), the strip comprising furthermore a separate edge formation part (20) of extended size for replacing the integral edge formation (76), said separate edge formation part (20) being secured, when mounted on the panel, to the body along said cut line (92) for juxtaposing with the edge (62) of the panel (54) in the second region and for overlying the panel (54) in the second region.

2. A strip (16) according to claim 1, wherein the body is produced by an extrusion process which also produces the hollow chamber.

3. A strip (16) according to claim 1, wherein the body is produced using an extrusion process and in which the hollow cavity (90) is produced by pressing together two parts of the material immediately after the extrusion process so that they become secured together during the subsequent processing but leaving between them the hollow cavity (90).

4. A strip (16) according to any preceding claim, in which in the second region the panel progressively changes in size and the separate edge formation correspondingly changes in size.

5. A strip (16) according to any preceding claim, in which the separate edge formation is produced by a moulding operation.

6. A strip (16) according to claim 5, in which the moulding operation secures the separate edge formation to the strip (16).

7. A strip (16) according to any preceding claim, in which the hollow cavity (90) extends along the whole length of the strip (16).

8. A strip (16) according to any preceding claim, which is secured to a second strip (18).

9. A strip (16) according to claim 8, which is secured to the second strip (18) by a moulding operation.

10. A strip (16) according to claim 9, in which the moulding operation which secures it to the second strip (18) also secures the separate edge formation (20).

11. A strip (16) according to any one of the preceding claims, in which the edge formation (20) comprises TPE.

12. A strip (16) according to any preceding claim, which is shaped to define a channel for receiving a pane of window glass (12) for a window opening, and in which the panel is part of a rigid frame (21) for the window opening.

13. A strip (16) according to any one of claims 1 to 11, which defines a channel for receiving a pane of window glass (12) for a predetermined window opening, the said panel forming part of a frame (21) for the window opening and the second region being a region adjacent a change in direction of the window frame (21).

14. A strip (16) according to claim 13, in combination with a second strip (18) which also defines a channel for receiving the pane of window glass (12), the two strips (18) being secured together at the change in direction of the window frame (21).

15. A strip (16) according to claim 14, in which the separate edge formation (20) is also secured to the second strip (18).

16. A window frame arrangement for a window opening, comprising a stiff window frame (21) having a smoothly radiussed region (19) extending across a change in direction of the window opening, and two sealing or guiding strips (16,18) according to any one of claims 1 to 11, wherein the panel (54) is part of the frame (21), the smoothly radiussed region (19) of the frame (21) corresponding to the second region of relatively large extent of the panel (54), each strip (16,18) defining a channel for receiving a pane of window glass (12) for the opening and which are secured together at the change in direction, the edge formation (76) of each strip (16,18) being arranged to engage with an edge of the window frame (21) along a portion of the length of the strip (16,18) outside the smoothly radiussed region (19) of the frame (21) and at the first region of relatively small extent of the panel (54), and the separate edge formation part (20) engaging an edge of the window frame (21) in the smoothly radiussed region (19) of the frame (21) and at the second region of relatively large extent of the panel (54).

17. An arrangement according to claim 16, in which the separate edge formation part (20) is secured to the strips (16,18) along the cut lines (92,94) of each of them.

18. An arrangement according to claim 16 or 17, in which the integral edge formation and the separate edge formation part (20) are each shaped to form a cosmetic lip (34,76).

19. An arrangement according to any one of claims 16 to 18, in which the change in direction of the window opening is a sharp corner of the window frame (21).

20. A method of making a sealing or guiding strip (16), the method including forming a body made of flexible material for mounting on a panel (54) having an edge (62), the panel (54) being more rigid than the flexible material and varying in size so that the panel has a first region of relatively small extent and a second region of relatively large extent, wherein the body overlies the first region of the panel (54) in use and partially overlies the second region of the panel, (54) in use, the body has an edge with a hollow cavity (90) formed in the body adjacent only to the edge of the body and an integral formation (76) formed at the edge of the body arranged to juxtapose with the edge (62) of the panel (54) along the first region of the panel (54), **characterized by** the integral edge formation (76) being removed, at a region corresponding to the second region of the panel, along a cut line (92) extending into the hollow cavity (90) and being replaced by a separate edge formation part (20) of extended size, which is secured to the body along said cut line (92) for juxtaposing with the edge (62) of the panel (54) in the second region and for overlying the panel (54) in the second region.

21. The method of claim 20, wherein the body is produced by an extrusion process which also produces the hollow chamber.

22. The method of claim 20, wherein the body is produced using an extrusion process and in which the hollow cavity (90) is produced by pressing together two parts of the material immediately after the extrusion process so that they become secured together during the subsequent processing but leaving between them the hollow cavity (90).

23. The method according to claims 20,21 or 22, in which the separate edge formation is produced by a moulding operation.

24. The method according to claim 23, in which the moulding operation secures the separate edge formation to the strip (16).

25. The method according to claims 20,21,22,23 or 24, including securing the said strip (16) to a second strip (18).

26. The method according to claim 25, including securing the said strip (16) to the second strip (18) by a moulding operation.

27. The method according to claim 26, in which the moulding operation which secures it to the second strip (18) also secures the separate edge formation (20).

## Patentansprüche

1. Dichtungs- oder Führungs streifen (16), der einen aus flexiblem Material bestehenden Körper zum Anbringen an einer Platte (54) mit einer Kante (62) umfasst, wobei die Platte (54) steifer ist als das flexible Material und ihre Größe so variiert, dass die Platte einen ersten Bereich relativ geringer Ausdehnung und einen zweiten Bereich relativ großer Ausdehnung hat, wobei der Körper in Funktion den ersten Bereich der Platte (54) über deckt und in Funktion den zweiten Bereich der Platte (54) teilweise überdeckt und eine Kante mit einem Hohlraum (90), der in dem Körper nur an der Kante des Körpers angrenzend ausgebildet ist, sowie eine integrale Struktur (76) an der Kante des Körpers aufweist, dieso angeordnet ist, dass sie sich entlang das ersten Bereiches der Platte (54) direkt neben der Kante (62) der Platte (54) befindet, wobei die integrale Kanten struktur (76) an einem Bereich, der dem zweiten Bereich der Platte (54) entspricht, entlang einer Schnittlinie (92) entfernt werden kann, die sich in den Hohlraum (90) hin einer streckt, und wobei der Streifendes Weiteren einen separaten Kanten strukturteil (20) erweiterter Größe zum Ersetzen der integralen Kanten struktur (76) umfasst, wobei der separate Kanten strukturteil (20), wenn er an der Platte angebracht ist, an dem Körper entlang der Schnittlinie (92) befestigt ist, und sich in dem zweiten Bereich direkt neben der Kante (62) der Platte (54) befindet und die Platte (54) überdeckt.

2. Streifen (16) nach Anspruch 1, wobei der Körper mit einem Extrusions prozess erzeugt wird, der auch die hohle Kammer erzeugt.

3. Streifen (16) nach Anspruch 1, wobei der Körper unter Einsatz eines Extrusions prozesses erzeugt wird und der Hohlraum (90) erzeugt wird, in dem zwei Teile des Materials unmittelbar nach dem Extrusions prozess so zusammen gepresst werden, dass sie während der anschließenden Bearbeitung aneinander befestigt werden, jedoch der Hohlraum (90) zwischen ihnen verbleibt.

4. Streifen (16) nach einem der vorangehenden Ansprüche, wobei sich die Größe der Platte in dem zweiten Bereich zunehmend ändert und sich die Größe der separaten Kanten struktur entsprechend ändert.

5. Streifen (16) nach einem der vorangehenden Ansprüche, wobei die separate Kanten struktur mit einem Form vorgang erzeugt wird.

6. Streifen (16) nach Anspruch 5, wobei der Formvorgang die separate Kanten struktur an dem Streifen (16) befestigt.

7. Streifen (16) nach einem der vorangehenden Ansprüche, wobei sich der Hohlraum (90) über die gesamte Länge des Streifens (16) erstreckt.

8. Streifen (16) nach einem der vorangehen den Ansprüche, der an einem zweiten Streifen (18) befestigt ist.

9. Streifen (16) nach Anspruch 8, der mit einem Form vorgang an dem zweiten Streifen (18) befestigt wird.

10. Streifen(16)nachAnspruch9,wobeiderFormvorgang,derihnandemzweiten Streifen (18) befestigt, auch die separate Kanten struktur (20) befestigt.

11. Streifen (16) nach einem der vorangehenden Ansprüche, wobei die Kanten struktur (20) TPE umfasst.

12. Streifen (16) nach einem der vorangehenden Ansprüche, der so geformt ist, dass er eine Rinne zum Aufnehmen einer Scheibe aus Fenster glas (12) für eine Fensteröffnung bildet, wobei die Platte Teil eines starren Rahmens (21) für die Fensteröffnung ist.

13. Streifen (16) nach einem der Ansprüche 1 bis 11, der eine Rinne zum Aufnehmen einer Scheibe aus Fenster glas (12) für eine vorgegebene Fensteröffnung bildet, wobei die Platte einen Teil eines Rahmens (21) für die Fenster öffnung bildet und der zweite Bereich ein Bereich ist, der an eine Richtungsänderung des Fensterrahmens (21) angrenzt.

14. Streifen (16) nach Anspruch 13 in Kombination mit einem zweiten Streifen (18), der auch eine Rinne zum Aufnehmender Scheibe aus Fenster glas (12) bildet, wobei die zwei Streifen (18) an der Richtungsänderung des Fensterrahmens (21) an einander befestigt sind.

15. Streifen (16) nach Anspruch 14, wobei die separate Kanten struktur (20) auch an dem zweiten Streifen (18) befestigt ist.

16. Fensterrahmen anordnung für eine Fensteröffnung, die einen steifen Fensterrahmen (21) mit einem gleichmäßigger undeten Bereich (19), der über eine Richtungsänderung der Fensteröffnung verläuft, und zwei Dichtungs- oder Führungs streifen (16, 18) nach einem der Ansprüche 1 bis 11 umfasst, wobei die Platte (54) Teil des Rahmens (21) ist, der gleichmäßigger undete Bereich (19) des Rahmens (21) dem zweiten Be-reich relativ großer Ausdehnung der Platte (54) entspricht, jeder streifen (16, 18) eine Rinne zum Aufnehmen einer Scheibe aus Fenster glas (12) für die Öffnung bildet und sie an der Richtungs änderung an einander befestigt sind, wobei die Kanten struktur (76) jedes Streifens (16, 18) so eingerichtet ist, dass sie mit einer Kante des Fensterrahmens(21)entlangeinesAbschnittsderLängedesstreifens(16,18) außerhalb des gleichmäßigger undeten Bereichs (19) des Rahmens (21) und an dem ersten Bereich relativ geringer Ausdehnung der Platte (54) und der separate Kanten- strukturteil (20) mit einer Kante des Fensterrahmens (21) in dem gleichmäßigger undeten Bereich (19) des Rahmens (21) und an dem zweiten Bereich relativ großer Ausdehnung der Platte (54) in Eingriff kommt.

17. Anordnung nach Anspruch 16, wobei der separate Kanten strukturteil (20) an den Streifen (16, 18) jeweils entlang ihrer Schnittlinien (92, 94) befestigt ist.

18. Anordnung nach Anspruch 16 oder 17, wobei die Integrale Kanten struktur und der separate Kanten strukturteil (20) jeweils so geformt sind, dass sie eine kosmetische Lippe (34, 76) bilden.

19. Anordnung nach einem der Ansprüche 16 bis 18, wobei die Richtungsänderung der Fensteröffnung eine scharte Ecke des Fensterrahmens (21) ist.

20. Verfahren zum Herstellen eines Dichtungs- oder Führungs streifens (16), wobei das Verfahren Ausbilden eines aus flexiblem Material bestehenden Körpers zum Anbringen an einer Platte (54) mit einer Kante (62) einschließt, die Platte (54) starrer ist als das flexible Material und ihre Größes ovarilert, dass die Platte einen ersten Bereich relativ geringer Ausdehnung und einen zweiten Bereich relativer großer Ausdehnung hat, wobei der Körper in Funktion den ersten Bereich der Platte (54) überdeckt und in Funktion den zweiten Bereich der Platte (54) teilweise über deckt, der Körper eine Kante mit einem Hohlraum (90), der in dem Körpernurandle Kante des Körpers angrenzend ausgebildet ist, sowie eine integrale Struktur (76) aufweist, die an der Kante des Körpers ausgebildet und so angeordnet ist, dass sie sich entlang das ersten Bereichs der Platte (54) direkt neben der Kante (62) der Platte (54) befindet, **dadurch gekennzeichnet, dass** die integrale Kanten struktur (76) an einem Bereich, der dem zweiten Bereich der Platte entspricht, entlang einer Schnittlinie (92) entfernt wird, die sich in den Hohlraum (90) hin einer streckt, und durch einen separaten Kanten strukturteil (20) erweiterter Größer ersetzt wird, der an dem Körper entlang der Schnittlinie (92) befestigt wird und sich in dem zweiten Bereich direkt neben der Kante (62) der Platte (54) befindet und die Platte (54) in dem zweiten Bereich über deckt.

21. Verfahren nach Anspruch 20, wobei der Körper mit einem Extrusions prozess erzeugt wird der auch die hohle Kammer erzeugt.

22. Verfahren nach Anspruch 20, wobei der Körper unter Verwendung eines Extrusions- prozesses erzeugt wird, und der Hohlraum (90) erzeugt wird, in dem zwei Teile des Materials unmittelbar nach dem Extrusions prozess so zusammen gepresst werden, dass sie während der anschließenden Bearbeitung an einander befestigt werden, jedoch der Hohlraum (90) zwischen ihnen verbleibt.

23. VerfahrennachdenAnsprüchen20,21oder22,wobeidieseparateKantenstruktur mit einen Form vorgang erzeugt wird.

24. Verfahren nach Anspruch 23, wobei der Formvorgang die separate Kanten struktur an dem Streifen (16) befestigt.

25. Verfahren nach einem der Ansprüche 20, 21, 22, 23 oder 24, das das Befestigen des Streifens (16) an einem zweiten Streifen (18) einschließt.

26. Verfahren nach Anspruch 25, das das Befestig endes Streifens (16) an dem zweiten Streifen (18) mit einem Form vorgang einschließt.

27. Verfahren nach Anspruch 26, wobei der Form vorgang, der in an dem zweiten Streifen (18) befestigt, auch die separate Kanten struktur (20) befestigt.

## Revendications

1. Bande d'étanchéité ou de guidage (16) comprenant un corps fabriqué à partir d'un matériau flexible destiné à être monté sur un panneau (54) présentant un bord (62), le panneau (54) étant plus rigide que le matériau flexible et de dimension variable de sorte que le panneau présente une première zone d'étendue relativement petite et une seconde zone d'étendue relativement grande, dans laquelle le corps recouvre la première zone du panneau (54) lors d'une utilisation et recouvre en partie la seconde zone du panneau (54) lors d'une utilisation, et présente un bord doté d'une cavité creuse (90) formée dans le corps adjacent uniquement au bord du corps et une formation intégrale (76) au niveau du bord du corps agencé pour se juxtaposer au bord (62) du panneau (54) le long de la première zone du panneau (54), la formation de bord intégrale (76) étant amovible, au niveau d'une zone correspondant à la seconde zone du panneau (54), le long d'une ligne de coupe (92) s'étendant à l'intérieur de la cavité creuse (90), et la bande comprenant en plus une partie de formation de bord séparé (20) d'une dimension étendue destinée à remplacer la formation de bord intégral (76), ladite partie de formation de bord séparé (20) étant fixée, lorsqu'elle est montée sur le panneau, au corps le long de ladite ligne de coupe (92) pour se juxtaposer au bord (62) du panneau (54) dans la seconde zone et pour recouvrir le panneau (54) dans la seconde zone.

2. Bande (16) selon la revendication 1, dans laquelle le corps est produit par un processus d'extrusion qui produit également la chambre creuse.

3. Bande (16) selon la revendication 1, dans laquelle le corps est produit en utilisant un processus d'extrusion et dans laquelle la cavité creuse (90) est produite en pressant ensemble deux parties du matériau immédiatement après le processus d'extrusion de sorte qu'elles deviennent fixées l'une à l'autre pendant le traitement ultérieur mais en laissant entre elles la cavité creuse (90).

4. Bande (16) selon l'une quelconque des revendications précédentes, dans laquelle dans la seconde zone la taille du panneau change progressivement et celle de la formation de bord sépare change de façon correspondante.

5. Bande (16) selon l'une quelconque des revendications précédentes, dans laquelle la formation de bord séparé est produite par une opération de moulage.

6. Bande (16) selon la revendication 5, dans laquelle l'opération de moulage fixe la formation de bord séparé à la bande (16).

7. Bande (16) selon l'une quelconque des revendications précédentes, dans laquelle la cavité creuse (90) s'étend le long de toute la longueur de la bande (16).

8. Bande (16) selon l'une quelconque des revendications précédentes, qui est fixée à une seconde bande (18).

9. Bande (16) selon la revendication 8, qui est fixée à la seconde bande (18) par une opération de moulage.

10. Bande (16) selon la revendication 9, dans laquelle l'opération de moulage qui la fixe à la seconde bande (18) fixe également la formation de bord séparé (20).

11. Bande (16) selon l'une quelconque des revendications précédentes, dans laquelle la formation de bord (20) comprend du TPE.

12. Bande (16) selon l'une quelconque des revendications précédentes, qui est façonnée pour définir un canal destiné à recevoir un carreau de verre à vitres (12) pour une ouverture de fenêtre, et dans laquelle le panneau fait partie d'un cadre rigide (21) pour l'ouverture de fenêtre.

13. Bande (16) selon l'une quelconque des revendications 1 à 11, qui définit un canal destiné à recevoir un carreau de verre à vitres (12) pour une ouverture de fenêtre prédéterminée, ledit panneau faisant partie d'un cadre (21) pour l'ouverture de fenêtre et la seconde zone étant une zone adjacente à un changement de direction du cadre de fenêtre (21) .

14. Bande (16) selon la revendication 13, en combinaison avec une seconde bande (18) qui définit également un canal destiné à recevoir le carreau du verre à vitres (12), les deux bandes (18) étant fixées l'une à l'autre au niveau du changement de direction du cadre de fenêtre (21).

15. Bande (16) selon la revendication 14, dans laquelle la formation de bord séparé (20) est également fixée à la seconde bande (18).

16. Agencement de cadre de fenêtre pour une ouverture de fenêtre, comprenant un cadre de fenêtre rigide (21) présentant une zone doucement arrondie (19) s'étendant en travers d'un changement de direction de l'ouverture de fenêtre, et deux bandes d'étanchéité ou de guidage (16, 18) selon l'une quelconque des revendications 1 à 11, dans lequel le panneau (54) fait partie du cadre (21), la zone doucement arrondie (19) du cadre (21) correspondant à la seconde zone d'étendue relativement grande du panneau (54), chaque bande (16, 18) définissant un canal destiné à recevoir un carreau de verre à vitres (12) pour l'ouverture et qui sont fixées l'une à l'autre au niveau du changement de direction, la formation de bord (76) de chaque bande (16, le) étant agencée pour se mettre en prise avec un bord du cadre de fenêtre (21) le long d'une partie de la longueur de la bande (16, le) à l'extérieur de la zone doucement arrondie (19) du cadre (21) et au niveau de la première zone d'étendue relativement petite du panneau (54), et la partie de formation de bord séparé (20) se mettant en prise avec un bord du cadre de fenêtre (21) dans la zone doucement arrondie (19) du cadre (21) et au niveau de la seconde zone de l'étendue relativement grande du panneau (54).

17. Agencement selon la revendication 16, dans lequel la partie de formation de bord séparé (20) est fixée aux bandes (16, 18) le long des lignes de coupe (92, 94) de chacune d'entre elles.

18. Agencement selon la revendication 16 ou 17, dans lequel la formation de bord intégral et la partie de formation de bord séparé (20) sont façonnées chacune pour former une lèvre cosmétique (34, 76).

19. Agencement selon l'une quelconque des revendications 16 à 18, dans lequel le changement de direction de l'ouverture de fenêtre est un coin tranchant du cadre de fenêtre (21).

20. Procédé de fabrication d'une bande d'étanchéité ou de guidage (16), le procédé comportant la formation d'un corps fabriqué à partir d'un matériau flexible destiné à être monté sur un panneau (54) présentant un bord (62), le panneau (54) étant plus rigide que le matériau flexible et de dimension variable de sorte que le panneau présente une première zone d'étendue relativement petite et une seconde zone d'étendue relativement grande, dans lequel le corps recouvre la première zone du panneau (54) au cours d'une utilisation et recouvre en partie la seconde zone du panneau (54) lors d'une utilisation, le corps présente un bord doté d'une cavité creuse (90) formée dans le corps adjacent uniquement au bord du corps et une formation intégrale (76) formée au niveau du bord du corps agencé pour se juxtaposer au bord (62) du panneau (54) le long de la première zone du panneau (54), **caractérisé en ce que** la formation de bord intégral (76) est retirée, au niveau d'une zone correspondant à la seconde zone du panneau (54), le long d'une ligne de coupe (92) s'étendant à l'intérieur de la cavité creuse (90) et est remplacée par une partie de formation de bord séparé (20) de dimension étendue, qui est fixée au corps le long de ladite ligne de coupe (92) pour se juxtaposer au bord (62) du panneau (54) dans la seconde zone et pour recouvrir le panneau (54) dans la seconde zone.

21. Procédé selon la revendication 20, dans lequel le corps est produit par un processus d'extrusion qui produit également la chambre creuse.

22. Procédé selon la revendication 20, dans lequel le corps est produit en utilisant un processus d'extrusion et dans lequel la cavité creuse (90) est produite en pressant ensemble deux parties du matériau immédiatement après le processus d'extrusion de sorte qu'elles deviennent fixées l'une à l'autre pendant le processus ultérieur mais en laissant entre elles la cavité creuse (90).

23. Procédé selon les revendications 20, 21 ou 22, dans lequel la formation de bord séparé est produite par une opération de moulage.

24. Procédé selon la revendication 23, dans lequel l'opération de moulage fixe la formation de bord séparé la bande (16).

25. Procédé selon les revendications 20, 21, 22, 23 ou 24, comportant la fixation de ladite bande (16) à une seconde bande (18).

26. Procédé selon la revendication 25, comportant la fixation de ladite bande (16) la seconde bande (18) par une opération de moulage.

27. Procédé selon la revendication 26, dans lequel l'opération de moulage qui la fixe à la seconde bande (19) fixe également la formation de bord séparé (20).
